# EUROPEAN PATENT APPLICATION

(11) **EP 4 694 130 A1**
(43) Date of publication of application: **11.02.2026**
(21) Application number: 24788629.4
(22) Date of filing: 02.04.2024
(51) Int. Cl.: H04N 19/46, H04N 19/85

(54) **DECODING DEVICE, ENCODING DEVICE, DECODING METHOD, AND ENCODING METHOD**

(30) Priority: 12.04.2023 US 202363458756 P
(71) Applicant: Panasonic Intellectual Property Corporation of America, Torrance, CA 90504 (US)
(72) Inventor: GAO, Jingying, Singapore 469332 (SG); TEO, Han Boon, Singapore 469332 (SG); LIM, Chong Soon, Singapore 469332 (SG); YADAV, Praveen Kumar, Singapore 469332 (SG); ABE, Kiyofumi, Kadoma-shi, Osaka 571-0057 (JP); NISHI, Takahiro, Kadoma-shi, Osaka 571-0057 (JP); TOMA, Tadamasa, Kadoma-shi, Osaka 571-0057 (JP)
(74) Representative: Grünecker Patent- und Rechtsanwälte PartG mbB
(86) International application number: PCT/JP2024/013682
(87) International publication number: WO 2024/214602

(57) **Abstract**

A decoding device includes: a circuit; and a memory connected to the circuit, in which the circuit decodes, from a bitstream, an image and an identifier associated with the image, and the identifier indicates at least one of a fact that the image is suitable for task processing corresponding to the identifier and a fact that the image is not suitable for the task processing.

## Description

### Field of the Invention

The present disclosure relates to a decoding device, an encoding device, a decoding method, and an encoding method.

### Background Art

Patent Literature 1 discloses a determination method for a computing capability resource related to the background art. A control node includes at least one of a terminal side computing capability control node and a network side computing capability control node. The control node receives first information indicating resource information of a computing capability available to the terminal side computing capability control node. The control node determines context information of the computing capability resource based on the first information.

### Citation List

### Patent Literature

Patent Literature 1: WO2023/050431

### Summary of the Invention

An object of the present disclosure is to improve execution accuracy of task processing.

A decoding device according to one aspect of the present disclosure includes: a circuit; and a memory connected to the circuit, in which the circuit decodes, from a bitstream, an image and an identifier associated with the image, and the identifier indicates at least one of a fact that the image is suitable for task processing corresponding to the identifier and a fact that the image is not suitable for the task processing.

### Brief Description of the Drawings

Fig. 1 is a view illustrating a simplified configuration of an image processing system according to an embodiment of the present disclosure.
Fig. 2 is a view illustrating a simplified configuration of a circuit included in an encoding device.
Fig. 3 is a flowchart showing processing executed by a circuit included in an encoding device.
Fig. 4 is a view illustrating a first example of image analysis by a setting unit.
Fig. 5 is a view illustrating a second example of image analysis by a setting unit.
Fig. 6 is a view illustrating a third example of image analysis by a setting unit.
Fig. 7 is a view illustrating image data and identifier data.
Fig. 8 is a view illustrating a first example of syntax regarding setting of an identifier.
Fig. 9 is a view illustrating a first setting example of a value of an identifier in syntax.
Fig. 10 is a view illustrating a second example of syntax regarding setting of an identifier.
Fig. 11 is a view illustrating a second setting example of a value of an identifier in syntax.
Fig. 12 is a view illustrating a simplified configuration of packet data storing each encoded image.
Fig. 13 is a view illustrating a simplified configuration of a circuit included in a decoding device.
Fig. 14 is a flowchart showing processing executed by a circuit included in a decoding device.
Fig. 15 is a view illustrating a first example of image selection based on identifier data.
Fig. 16 is a view illustrating a second example of image selection based on identifier data.
Fig. 17 is a view illustrating image data and identifier data.
Fig. 18 is a view illustrating an example of syntax regarding setting of an identifier.
Fig. 19 is a view illustrating an example of syntax regarding setting of an identifier.
Fig. 20 is a view illustrating a first setting example of a value of an identifier in syntax, corresponding to Fig. 9.
Fig. 21 is a view illustrating a second setting example of a value of an identifier in syntax, corresponding to Fig. 10.
Fig. 22 is a view illustrating an example of syntax regarding setting of an identifier on the basis of Fig. 18.
Fig. 23 is a view illustrating an example of syntax regarding setting of an identifier on the basis of Fig. 19.
Fig. 24 is a view illustrating an example of syntax regarding setting of task processing.
Fig. 25 is a view illustrating a simplified configuration of a circuit included in an encoding device.
Fig. 26 is a view illustrating a simplified configuration of a circuit included in an encoding device.
Fig. 27 is a view illustrating a simplified configuration of an image processing system according to a seventh modification.
Fig. 28 is a view illustrating an example of setting information of task processing.
Fig. 29 is a view illustrating a simplified configuration of a circuit included in an encoding device.
Fig. 30 is a flowchart showing processing executed by a circuit included in an encoding device.
Fig. 31 is a view illustrating image data, first identifier data, and second identifier data.
Fig. 32 is a view illustrating a bit string including first identifier data and second identifier data.
Fig. 33A is a view illustrating a first example of syntax regarding setting of a first identifier and a second identifier.
Fig. 33B is a view illustrating a first example of syntax regarding setting of a first identifier and a second identifier.
Fig. 34A is a view illustrating a second example of syntax regarding setting of a first identifier and a second identifier.
Fig. 34B is a view illustrating a second example of syntax regarding setting of a first identifier and a second identifier.
Fig. 35 is a view illustrating a simplified configuration of a circuit included in a decoding device.
Fig. 36 is a flowchart showing processing executed by a circuit included in a decoding device.
Fig. 37 is a view illustrating an example of selection of a first image and a second image based on first identifier data and second identifier data.
Fig. 38 is a view illustrating a setting example of a value of an identifier in syntax.
Fig. 39 is a view illustrating an example of selection of a first image and a second image based on the first identifier data and the second identifier data.
Fig. 40 is a view illustrating an example of syntax regarding setting of task processing.
Fig. 41 is a view illustrating a simplified configuration of a bitstream.
Fig. 42 is a view illustrating an example of syntax regarding setting of a first identifier and a second identifier.
Fig. 43 is a view illustrating an example of syntax regarding setting of a first identifier and a second identifier.
Fig. 44 is a view illustrating an example of syntax regarding setting of a first identifier and a second identifier.
Fig. 45 is a view illustrating an example of syntax regarding setting of a first identifier and a second identifier.

### Description of Embodiments

### (Knowledge Underlying Present Disclosure)

An image processing system according to the background art includes an encoding device, a decoding device, and a task processing unit. The encoding device acquires image data of a moving image captured by a camera, and encodes an image included in the acquired image data into a bitstream. The encoding device transmits the bitstream to the decoding device. The decoding device receives a bitstream, decodes an image from the received bitstream, and inputs the decoded image to the task processing unit. The task processing unit executes task processing based on the image input from the decoding device.

The task processing includes human vision and a machine task. Human vision is visual recognition or viewing of a moving image by a human such as an operator or a user. Machine tasks include various types of task processing such as object detection, object tracking, object segmentation, action recognition, or pose estimation using a machine-learned estimation model.

The processing speed varies depending on the type of task processing depending on the processing capability of the hardware resource that executes each task processing. Therefore, the decoding device performs thinning processing on a plurality of images decoded from the bitstream, and inputs the image after the thinning processing to the task processing unit. For example, the decoding device thins out images of even frames of decoded 60 fps images to input 30 fps images to the task processing unit.

However, in a case where an image important for the task processing is included in the thinned out images of even frames, the estimation accuracy of the estimation model decreases, and as a result, the execution accuracy of the task processing decreases.

In order to solve such problem, the present inventor has found that the above problem can be solved by including, in a bitstream, information indicating whether or not each image is suitable for task processing and transmitting it from an encoding device to a decoding device, and the decoding device executing thinning processing according to the task processing based on the information, and has arrived at the present disclosure.

Next, each aspect of the present disclosure will be described.

A decoding device according to a first aspect of the present disclosure includes: a circuit; and a memory connected to the circuit, in which the circuit decodes, from a bitstream, an image and an identifier associated with the image, and the identifier indicates at least one of a fact that the image is suitable for task processing corresponding to the identifier and a fact that the image is not suitable for the task processing.

According to the first aspect, the identifier indicates at least one of a fact that the image is suitable for task processing corresponding to the identifier and a fact that the image is not suitable for the task processing. Therefore, at least one image to be used for the task processing can be appropriately selected based on the identifier from among the plurality of images decoded from the bitstream, whereby the execution accuracy of the task processing can be improved.

In the decoding device according to a second aspect of the present disclosure, in the first aspect, the image may include a plurality of images, and the circuit may further select, based on the identifier, at least one image to be used for the task processing from the plurality of images.

According to the second aspect, an image suitable for the task processing can be selected based on the identifier, whereby the execution accuracy of the task processing can be improved.

In the decoding device according to a third aspect of the present disclosure, in the first or second aspect, the task processing may include a machine task.

According to the third aspect, an image suitable for the machine task can be selected based on the identifier, whereby the machine task can be appropriately executed.

In the decoding device according to a fourth aspect of the present disclosure, in any one of the first to third aspects, the task processing may include human vision.

According to the fourth aspect, an image suitable for human vision can be selected based on the identifier, whereby human vision can be appropriately executed.

In the decoding device according to a fifth aspect of the present disclosure, in any one of the first to fourth aspects, the identifier may include a plurality of identifiers, the task processing may include multiple types of task processing, and the plurality of identifiers may correspond to different types of task processing among the multiple types of task processing.

According to the fifth aspect, the plurality of identifiers can correspond to a plurality of pieces of task processing.

In the decoding device according to a sixth aspect of the present disclosure, in the fifth aspect, the plurality of identifiers may include a first identifier and a second identifier, the task processing corresponding to the first identifier may include a machine task, and the task processing corresponding to the second identifier may include human vision.

According to the sixth aspect, an image suitable for the machine task can be selected based on the first identifier, whereby the machine task can be appropriately executed. An image suitable for human vision can be selected based on the second identifier, whereby human vision can be appropriately executed. That is, it becomes possible to appropriately execute the machine task or the human vision based on the first identifier and the second identifier according to the property of the image.

In the decoding device according to a seventh aspect of the present disclosure, in any one of the first to sixth aspects, the identifier may include a first value and a second value, the first value may indicate that the image is suitable for the task processing, and the second value may indicate that the image is not suitable for the task processing.

According to the seventh aspect, the circuit can easily determine an image to be selected and an image not to be selected based on the first value and the second value.

In the decoding device according to an eighth aspect of the present disclosure, in any one of the first to sixth aspects, the identifier may include a first value and a second value, the first value may indicate that the image is suitable for the task processing or that the image is not suitable for the task processing, and the second value may indicate that whether or not the image is suitable for the task processing is not specified.

According to the eighth aspect, the circuit can easily determine an image to be selected and an image not to be selected based on the first value. The circuit can arbitrarily determine, in accordance with its own processing capability or the like, whether or not to select an image associated with an identifier of the second value.

In the decoding device according to a ninth aspect of the present disclosure, in any one of the first to eighth aspects, the image may include a plurality of images, the plurality of images may include an image not associated with the identifier, and the image not associated with the identifier may indicate an image that does not specify whether or not the image is suitable for the task processing.

According to the ninth aspect, it is possible to arbitrarily determine, in accordance with its own processing capability or the like, whether or not to select an image not associated with an identifier.

In the decoding device according to a tenth aspect of the present disclosure, in any one of the first to ninth aspects, the identifier may include one or more identifiers, the task processing may include one or more types of task processing, and the circuit may further decode, from the bitstream, correspondence information indicating a correspondence between the one or more identifiers and the one or more types of task processing.

According to the tenth aspect, one or more pieces of task processing can be arbitrarily set in the correspondence information, and the execution accuracy of the task processing can be improved with respect to each of the one or more pieces of task processing having been set.

In the decoding device according to an eleventh aspect of the present disclosure, in the tenth aspect, the correspondence information may be stored in a header area of the bitstream.

According to the eleventh aspect, the circuit can easily acquire the correspondence information from the header area of the bitstream.

In the decoding device according to a twelfth aspect of the present disclosure, in any one of the first to eleventh aspects, the identifier may be stored in a header area of the image associated with the identifier.

According to the twelfth aspect, the circuit can easily acquire an identifier associated with each image from the header area of each image.

In the decoding device according to a thirteenth aspect of the present disclosure, in any one of the first to eleventh aspect, the image may include a plurality of images, the identifier may include one or more identifiers, and the one or more identifiers may be stored in a header area of one image included in the plurality of images, and are associated with the one image and one or more images different from the one image.

According to the thirteenth aspect, the circuit can easily acquire one or more identifiers associated with one or more images from the header area of one image.

In the decoding device according to a fourteenth aspect of the present disclosure, in any one of the eleventh to thirteenth aspect, the header area may be an SEI area.

According to the fourteenth aspect, the circuit can easily acquire an identifier from the SEI area.

In the decoding device according to a fifteenth aspect of the present disclosure, in any one of the first to fourteenth aspect, the image may include a plurality of images, and the circuit may further decode, from the bitstream, specification information for specifying the image associated with the identifier among the plurality of images.

According to the fifteenth aspect, the number of identifiers and the number of images do not need to match by specifying, with the specification information, the image associated with the identifier, and therefore the data amount of the identifier can be reduced. This enables reduction in the code amount and improvement of the coding efficiency.

An encoding device according to a sixteenth aspect of the present disclosure includes: a circuit; and a memory connected to the circuit, in which the circuit encodes, to a bitstream, an image and an identifier associated with the image, and the identifier indicates at least one of a fact that the image is suitable for task processing corresponding to the identifier and a fact that the image is not suitable for the task processing.

According to the sixteenth aspect, the identifier indicates at least one of a fact that the image is suitable for task processing corresponding to the identifier and a fact that the image is not suitable for the task processing. Therefore, the decoding device having received the bitstream can appropriately select, based on the identifier, at least one image to be used for the task processing from among the plurality of images decoded from the bitstream, whereby the execution accuracy of the task processing can be improved.

In the encoding device according to a seventeenth aspect of the present disclosure, in the sixteenth aspect, the circuit may set a value of the identifier based on an encoding condition under which the image is encoded.

According to the seventeenth aspect, after encoding an image, the circuit can appropriately determine whether or not the image is suitable for task processing based on the encoding condition.

In the encoding device according to an eighteenth aspect of the present disclosure, in the sixteenth or seventeenth aspect, the circuit may set a value of the identifier based on an image quality of the image after encoding.

According to the eighteenth aspect, after encoding an image, the circuit can appropriately determine whether or not the image is suitable for task processing based on the image quality.

In the encoding device according to a nineteenth aspect of the present disclosure, in any one of the sixteenth to eighteenth aspects, the circuit may acquire, from an external device, an image of an encoding target and related information related to the image, and set a value of the identifier based on the related information.

According to the nineteenth aspect, the circuit can appropriately determine whether or not the image is suitable for task processing based on the related information before encoding the image.

In the encoding device according to a twentieth aspect of the present disclosure, in any one of the sixteenth to nineteenth aspect, the circuit may perform image analysis on an image of an encoding target, and may set a value of the identifier based on a result of the image analysis.

According to the twentieth aspect, before encoding an image, the circuit can appropriately determine whether or not the image is suitable for the task processing based on the result of the image analysis.

In the encoding device according to a twenty-first aspect of the present disclosure, in any one of the sixteenth to twentieth aspects, the task processing may include a machine task.

According to the twenty-first aspect, the decoding device having received the bitstream can select, based on the identifier, an image suitable for the machine task, whereby the machine task can be appropriately executed.

In the encoding device according to a twenty-second aspect of the present disclosure, in any one of the sixteenth to twenty-first aspects, the task processing may include human vision.

According to the twenty-second aspect, the decoding device having received the bitstream can select, based on the identifier, an image suitable for human vision, whereby human vision can be appropriately executed.

In the encoding device according to a twenty-third aspect of the present disclosure, in any one of the sixteenth to twenty-second aspects, the identifier may include a plurality of identifiers, the task processing may include multiple types of task processing, and the plurality of identifiers may correspond to different types of task processing among the multiple types of task processing.

According to the twenty-third aspect, the plurality of identifiers can correspond to a plurality of pieces of task processing.

In the encoding device according to a twenty-fourth aspect of the present disclosure, in the twenty-third aspect, the plurality of identifiers may include a first identifier and a second identifier, the task processing corresponding to the first identifier may include a machine task, and the task processing corresponding to the second identifier may include human vision.

According to the twenty-fourth aspect, the decoding device having received the bitstream can select, based on the first identifier, an image suitable for the machine task, whereby the machine task can be appropriately executed. The decoding device can select, based on the second identifier, an image suitable for human vision, whereby human vision can be appropriately executed. That is, it becomes possible to appropriately execute the machine task or the human vision based on the first identifier and the second identifier according to the property of the image.

In the encoding device according to a twenty-fifth aspect of the present disclosure, in any one of the sixteenth to twenty-fourth aspects, the identifier may include a first value and a second value, the first value may indicate that the image is suitable for the task processing, and the second value may indicate that the image is not suitable for the task processing.

According to the twenty-fifth aspect, the decoding device having received the bitstream can easily determine an image to be selected and an image not to be selected based on the first value and the second value.

In the encoding device according to a twenty-sixth aspect of the present disclosure, in any one of the sixteenth to twenty-fourth aspects, the identifier may include a first value and a second value, the first value may indicate that the image is suitable for the task processing or that the image is not suitable for the task processing, and the second value may indicate that whether or not the image is suitable for the task processing is not specified.

According to the twenty-sixth aspect, the decoding device having received the bitstream can easily determine an image to be selected and an image not to be selected based on the first value. The decoding device can arbitrarily determine, in accordance with its own processing capability or the like, whether or not to select an image associated with an identifier of the second value.

In the encoding device according to a twenty-seventh aspect of the present disclosure, in any one of the sixteenth to twenty-sixth aspects, the image may include a plurality of images, the plurality of images may include an image not associated with the identifier, and the image not associated with the identifier may indicate an image that does not specify whether or not the image is suitable for the task processing.

According to the twenty-seventh aspect, the decoding device having received the bitstream can arbitrarily determine, in accordance with its own processing capability or the like, whether or not to select an image not associated with an identifier.

In the encoding device according to a twenty-eighth aspect of the present disclosure, in any one of the sixteenth to twenty-seventh aspect, the identifier may include one or more identifiers, the task processing may include one or more types of task processing, and the circuit may further encode, to the bitstream, correspondence information indicating correspondence between the one or more identifiers and the one or more types of task processing.

According to the twenty-eighth aspect, one or more pieces of task processing can be arbitrarily set in the correspondence information, and the execution accuracy of the task processing can be improved with respect to each of the one or more pieces of task processing having been set.

In the encoding device according to a twenty-ninth aspect of the present disclosure, in any one of the sixteenth to twenty-eighth aspect, the correspondence information may be stored in a header area of the bitstream.

According to the twenty-ninth aspect, the decoding device having received the bitstream can easily acquire the correspondence information from the header area of the bitstream.

In the encoding device according to a thirtieth aspect of the present disclosure, in any one of the sixteenth to twenty-ninth aspects, the identifier may be stored in a header area of the image associated with the identifier.

According to the thirtieth aspect, the decoding device having received the bitstream can easily acquire an identifier associated with each image from the header area of each image.

In the encoding device according to a thirty-first aspect of the present disclosure, in any one of the sixteenth to thirtieth aspect, the image may include a plurality of images, the identifier may include one or more identifiers, and the one or more identifiers may be stored in a header area of one image included in the plurality of images, and are associated with the one image and one or more images different from the one image.

According to the thirty-first aspect, the decoding device having received the bitstream can easily acquire one or more identifiers associated with one or more images from the header area of one image.

In the encoding device according to a thirty-second aspect of the present disclosure, in any one of the twenty-ninth to thirty-first aspect, the header area may be an SEI area.

According to the thirty-second aspect, the circuit can easily acquire an identifier from the SEI area.

In the encoding device according to a thirty-third aspect of the present disclosure, in any one of the sixteenth to thirty-second aspect, the image may include a plurality of images, and the circuit may further encode, to the bitstream, specification information for specifying the image associated with the identifier among the plurality of images.

According to the thirty-third aspect, the number of identifiers and the number of images do not need to match by specifying, with the specification information, the image associated with the identifier, and therefore the data amount of the identifier can be reduced. This enables reduction in the code amount and improvement of the coding efficiency.

A decoding method according to a thirty-fourth aspect of the present disclosure includes: by a decoding device, decoding, from a bitstream, an image and an identifier associated with the image, in which the identifier indicates at least one of a fact that the image is suitable for task processing corresponding to the identifier and a fact that the image is not suitable for the task processing.

According to the thirty-fourth aspect, the identifier indicates at least one of a fact that the image is suitable for task processing corresponding to the identifier and a fact that the image is not suitable for the task processing. Therefore, at least one image to be used for the task processing can be appropriately selected based on the identifier from among the plurality of images decoded from the bitstream, whereby the execution accuracy of the task processing can be improved.

An encoding method according to a thirty-fifth aspect of the present disclosure includes: by an encoding device, encoding, to a bitstream, an image and an identifier associated with the image, in which the identifier indicates at least one of a fact that the image is suitable for task processing corresponding to the identifier and a fact that the image is not suitable for the task processing.

According to the thirty-fifth aspect, the identifier indicates at least one of a fact that the image is suitable for task processing corresponding to the identifier and a fact that the image is not suitable for the task processing. Therefore, the decoding device having received the bitstream can appropriately select, based on the identifier, at least one image to be used for the task processing from among the plurality of images decoded from the bitstream, whereby the execution accuracy of the task processing can be improved.

### (Embodiments of Present Disclosure)

Embodiments of the present disclosure will be described in detail below with reference to the drawings. Note that elements denoted by the same reference numerals in different drawings represent the same or corresponding elements.

Note that each of the embodiments described below shows one specific example of the present disclosure. Numerical values, shapes, components, steps, order of steps, and the like shown in the following embodiments are merely examples, and are not intended to limit the present disclosure. A component that is not described in an independent claim representing the highest concept among components in the embodiments below is described as an arbitrary component. In all the embodiments, respective items of content can be combined.

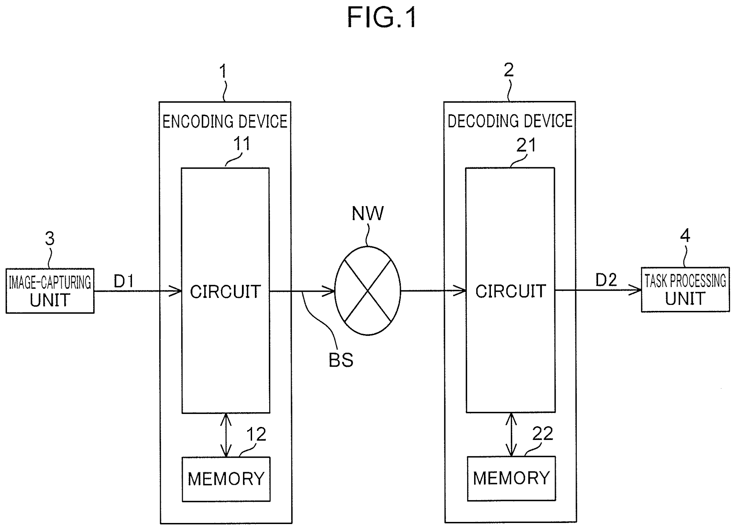

Fig. 1 is a view illustrating a simplified configuration of an image processing system according to an embodiment of the present disclosure. The image processing system includes an encoding device 1, a decoding device 2, an image-capturing unit 3, a task processing unit 4, and a transmission path NW.

The image-capturing unit 3 is an example of an external device, and includes a camera that captures a moving image. The image-capturing unit 3 inputs image data D1 of a captured moving image to the encoding device 1.

The encoding device 1 transmits a bitstream BS to the decoding device 2 via the transmission path NW. The decoding device 2 receives the bitstream BS.

The task processing unit 4 executes task processing based on image data D2 input from the decoding device 2. The task processing includes human vision and a machine task. Human vision is visual recognition or viewing of a moving image by a human such as an operator or a user. Machine tasks include various types of task processing such as object detection, object tracking, object segmentation, action recognition, or pose estimation using a machine-learned estimation model. The task processing unit 4 that executes human vision includes a display device such as a liquid crystal display or an organic EL display. The task processing unit 4 that executes a machine task includes an inferencer using AI.

The transmission path NW is the Internet, a wide area network (WAN), a local area network (LAN), or an arbitrary combination of them. The transmission path NW is desirably a private network or the like in which secure communication is secured by access restriction.

The encoding device 1 includes a circuit 11 and a memory 12 connected to the circuit 11. The circuit 11 is configured to include a processor such as a CPU. The memory 12 is configured to include an arbitrary recording medium such as a ROM, a RAM, an HDD, an SSD, or a semiconductor memory. The memory 12 stores data or the like that is a processing target by the circuit 11 or that is being processed.

The decoding device 2 includes a circuit 21 and a memory 22 connected to the circuit 21. The circuit 21 is configured to include a processor such as a CPU. The memory 22 is configured to include an arbitrary recording medium such as a ROM, a RAM, an HDD, an SSD, or a semiconductor memory. The memory 22 stores data or the like that is a processing target by the circuit 21 or that is being processed.

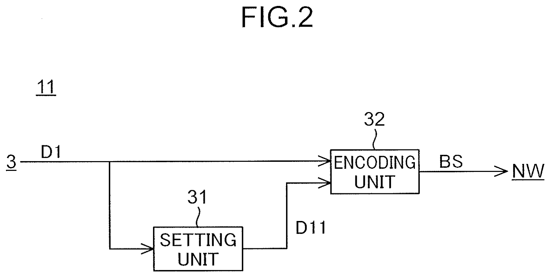

Fig. 2 is a view illustrating a simplified configuration of the circuit 11 included in the encoding device 1. The circuit 11 includes a setting unit 31 and an encoding unit 32.

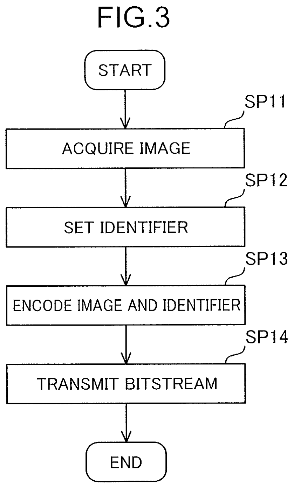

Fig. 3 is a flowchart showing the processing executed by the circuit 11 included in the encoding device 1.

First, in step SP11, the circuit 11 acquires a plurality of images included in the image data D1 input from the image-capturing unit 3. The image data D1 is input to the setting unit 31 and the encoding unit 32.

Next, in step SP12, the setting unit 31 performs image analysis on each image of an encoding target included in the image data D1, and sets a value of an identifier based on a result of the image analysis. The setting unit 31 inputs, to the encoding unit 32, the identifier data D11 including the identifier whose value has been set.

The identifier indicates at least one of a fact that the image is suitable (i.e., appropriate) for the task processing corresponding to the identifier and a fact that the image is not suitable (i.e., inappropriate) for the task processing corresponding to the identifier. The fact that an image is suitable for task processing includes a fact that use of the image is recommended when the task processing is executed on the decoding device 2 side, or a fact that the image has been subjected to image processing suitable for the task processing. The fact that an image is not suitable for task processing includes a fact that use of the image is not recommended (i.e., unrecommended) when the task processing is executed on the decoding device 2 side, or a fact that the image has not been subjected to image processing suitable for the task processing.

Next, in step SP13, the encoding unit 32 encodes, to the bitstream BS, the plurality of images included in the image data D1 input from the image-capturing unit 3 and a plurality of identifiers included in the identifier data D11 input from the setting unit 31.

Next, in step SP14, the circuit 11 transmits the bitstream BS to the decoding device 2 via the transmission path NW.

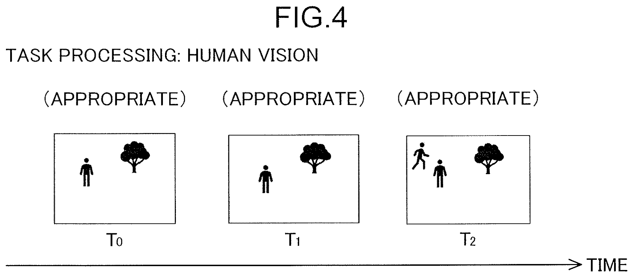

Fig. 4 is a view illustrating a first example of the image analysis by the setting unit 31. Fig. 4 illustrates three images in chronological order corresponding to times T₀, T₁, and T₂. The image corresponding to the time T₀ includes a tree and a pedestrian. The image corresponding to the time T₁ includes a tree and a pedestrian slightly moved from that at the time T₀. The image corresponding to the time T₂ includes a tree, a pedestrian slightly moving from that at the time T₁, and a jogger. In a case where the task processing corresponding to the identifier is human vision, the setting unit 31 sets all images to "appropriate" in order to perform smooth moving image reproduction.

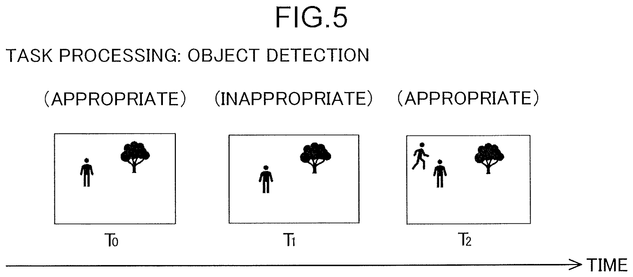

Fig. 5 is a view illustrating a second example of the image analysis by the setting unit 31. In a case where the task processing corresponding to the identifier is object detection, since the pedestrian has already been detected at the time T₀, the setting unit 31 sets the images corresponding to the times T₀ and T₂ as "appropriate" and the image corresponding to the time T₁ as "inappropriate".

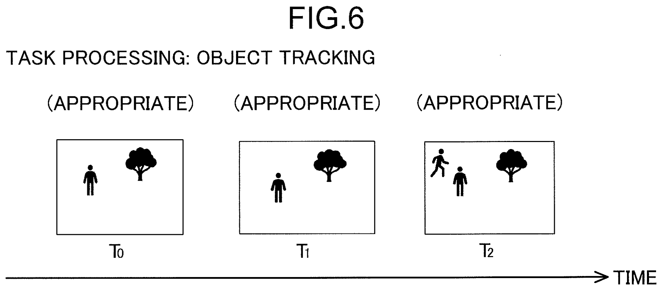

Fig. 6 is a view illustrating a third example of the image analysis by the setting unit 31. In a case where the task processing corresponding to the identifier is object tracking, it is necessary to track the movement even if the movement amount is small, and therefore, the setting unit 31 sets all the images to "appropriate".

The setting unit 31 may set the value of the identifier based on the image quality of the image before encoding. The setting unit 31 evaluates the image quality of the image before encoding on the basis of a sharpness value, a contrast value, a noise level, a peak signal to noise ratio (PSNR) value, or the like. The setting unit 31 may evaluate the image quality using a machine learning algorithm. By analyzing a histogram of the image, the setting unit 31 may evaluate the image quality depending on whether the image is overexposed, underexposed, or appropriately exposed.

In a case where the task processing is human vision, an image with low image quality deteriorates visibility. In a case where the task processing is object detection, an image with low image quality deteriorates estimation accuracy. Therefore, in a case where the task processing is human vision or object detection, the setting unit 31 may set an image whose image quality before encoding is equal to or greater than the threshold value as "appropriate", and may set an image whose image quality before encoding is less than the threshold value as "inappropriate".

In a case where the task processing is object tracking, the tolerance for a change in image quality is high, and therefore, the trajectory of an object can be detected even in an image with a low image quality. Therefore, in a case where the task processing is object tracking, the setting unit 31 may set all the images to "appropriate".

In this manner, the setting unit 31 determines whether the image is suitable (appropriate) or not suitable (inappropriate) for the task processing in accordance with the type of the task processing corresponding to the identifier. In the present embodiment, task processing executed by the task processing unit 4 is set to one specific type, and the encoding device 1 and the decoding device 2 share the setting information in advance.

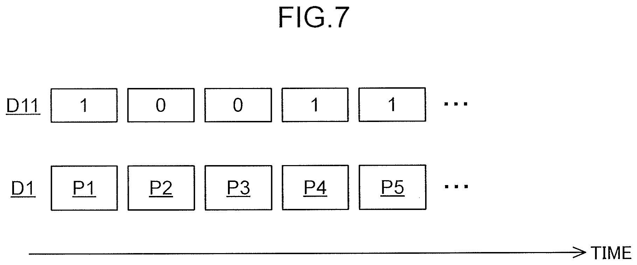

Fig. 7 is a view illustrating the image data D1 and the identifier data D11. The image data D1 includes a plurality of images (five images P1 to P5 in this example) in chronological order. The identifier data D11 includes an identifier associated with each of the images P1 to P5. The identifier is 1-bit data, and the value of the identifier is set to "1" or "0".

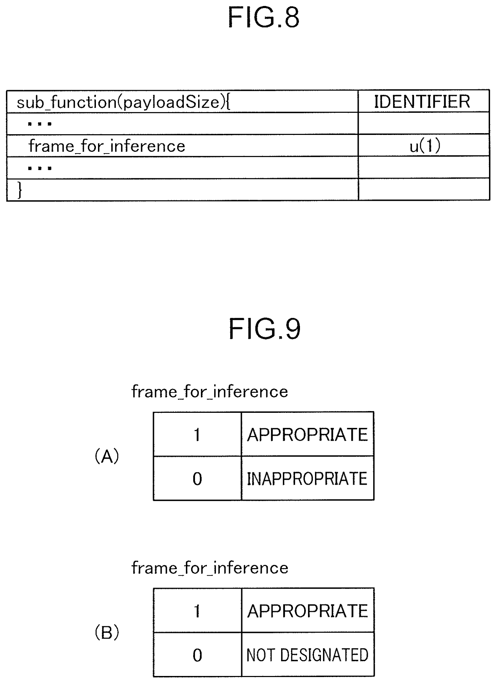

Fig. 8 is a view illustrating a first example of syntax regarding setting of an identifier. The syntax includes an item of "frame_for_inference".

Fig. 9 is a view illustrating a first setting example of a value of an identifier in syntax. As illustrated in (A), in a case where the value of "frame _for_inference" is set to "1", it is indicated that the associated image is "appropriate". In a case where the value of "frame_for_inference" is set to "0", it is indicated that the associated image is "inappropriate".

Note that as illustrated in (B), in a case where the value of "frame _for_inference" is set to "0", it may be indicated that "appropriate" or "inappropriate" is not designated on the encoding device 1 side, that is, whether or not the associated image is suitable for the task processing is not specified on the encoding device 1 side.

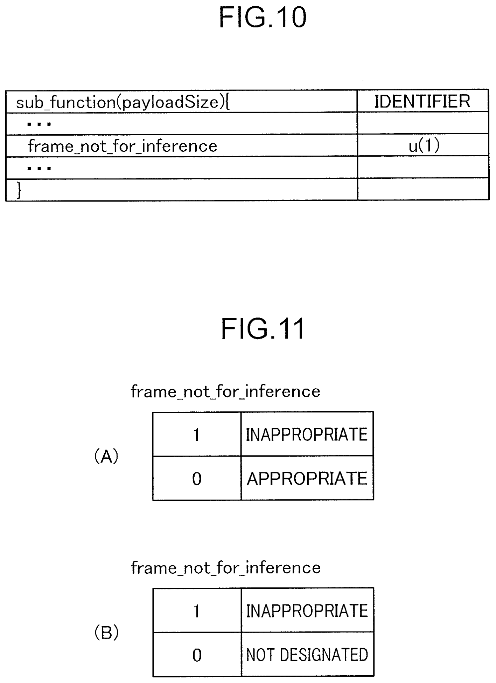

Fig. 10 is a view illustrating a second example of syntax regarding setting of an identifier. The syntax includes an item of "frame_not_for_inference".

Fig. 11 is a view illustrating a second setting example of the value of the identifier in the syntax. As illustrated in (A), in a case where the value of "frame_not_for_inference" is set to "1", it is indicated that the associated image is "inappropriate". In a case where the value of "frame_not_for_inference" is set to "0", it is indicated that the associated image is "appropriate".

Note that as illustrated in (B), in a case where the value of "frame_not_for_inference" is set to "0", it may be indicated that "appropriate" or "inappropriate" is not designated on the encoding device 1 side, that is, whether or not the associated image is suitable for the task processing is not specified on the encoding device 1 side.

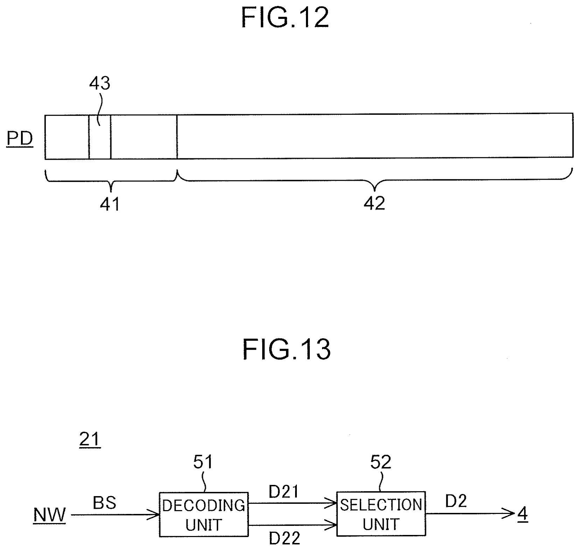

Fig. 12 is a view illustrating a simplified configuration of packet data PD storing each of the encoded images P1 to P5. The packet data PD includes a header area 41 and a payload area 42. The header area 41 includes a supplemental enhancement information (SEI) area 43 for storing additional information. The encoding unit 32 stores encoding data of the image into the payload area 42, and stores the encoded data of the identifier associated with the image into the SEI area 43. However, the encoding unit 32 may store the encoded data of the identifier associated with the image into a VPS, an SPS, a PPS, a PH, an SH, an APS, a tile header, or the like, in place of the SEI area 43. The SEI area 43 may be prefix_SEI located before the payload area 42 or may be suffix_SEI located after the payload area 42.

Fig. 13 is a view illustrating a simplified configuration of the circuit 21 included in the decoding device 2. The circuit 21 includes a decoding unit 51 and a selection unit 52.

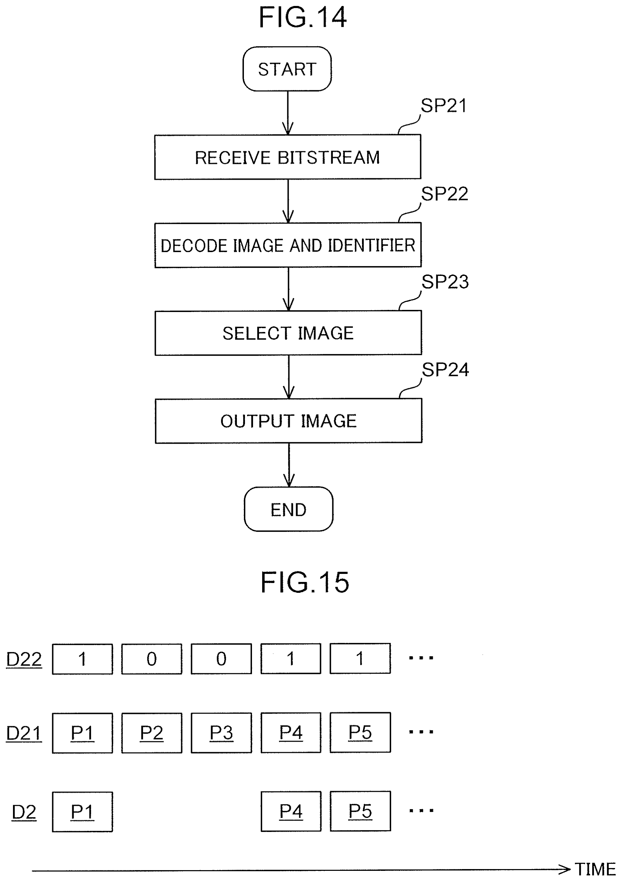

Fig. 14 is a flowchart showing the processing executed by the circuit 21 included in the decoding device 2.

First, in step SP21, the circuit 21 receives the bitstream BS from the encoding device 1 via the transmission path NW. The bitstream BS is input to the decoding unit 51.

Next, in step SP22, by decoding the plurality of images and the identifier associated with each of the images from the bitstream BS, the circuit 21 outputs image data D21 corresponding to the image data D1 and identifier data D22 corresponding to the identifier data D11. The image data D21 and the identifier data D22 are input to the selection unit 52.

Next, in step SP23, based on the identifier included in the identifier data D22, the selection unit 52 selects at least one image to be used for the task processing from among the plurality of images included in the image data D21.

Next, in step SP24, the selection unit 52 outputs the image data D2 including the at least one selected image. The image data D2 is input to the task processing unit 4. The task processing unit 4 executes the task processing using at least one image included in the input image data D2.

Fig. 15 is a view illustrating a first example of the image selection based on the identifier data D22. Fig. 15 illustrates an example in which, corresponding to (A) of Fig. 9, in a case where the value of "frame_for_inference" is set to "1", it is indicated that the associated image is "appropriate", and in a case where the value of "frame_for _inference" is set to "0", it is indicated that the associated image is "inappropriate".

The image data D21 includes a plurality of images (five images P1 to P5 in this example) in chronological order. The identifier data D22 includes an identifier associated with each of the images P1 to P5. The values of the identifiers are set to "1", "0", "0", "1", and "1" for the images P1 to P5, respectively.

The selection unit 52 selects the images P1, P4, and P5 whose values of the identifier are "1" among the plurality of images P1 to P5 included in the image data D21, and does not select the images P2 and P3 whose values of the identifier are "0". As a result, the selection unit 52 outputs the image data D2 including the selected images P1, P4, and P5.

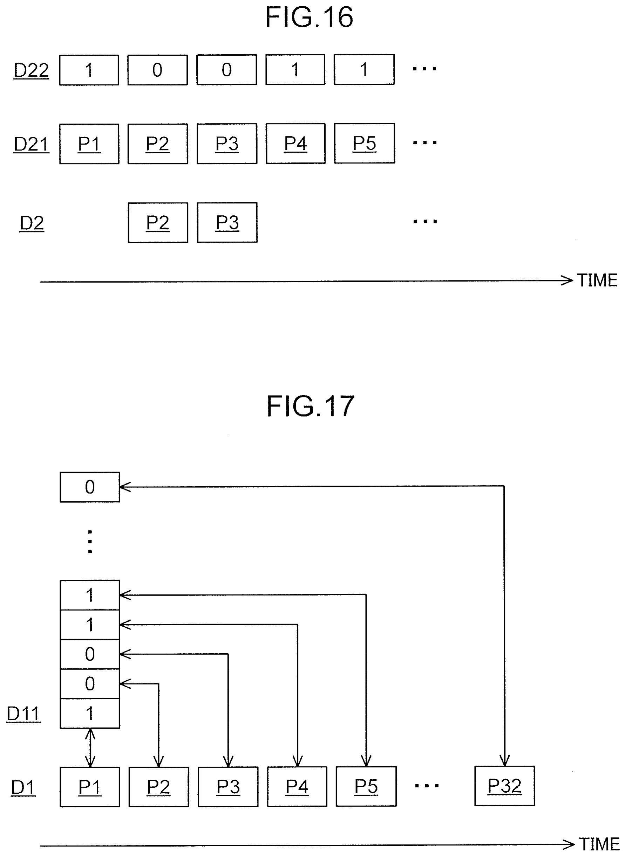

Fig. 16 is a view illustrating a second example of the image selection based on the identifier data D22. Fig. 16 illustrates an example in which, corresponding to (A) of Fig. 11, in a case where the value of "frame_not_for_inference" is set to "1", it is indicated that the associated image is "inappropriate", and in a case where the value of "frame_not_for_inference" is set to "0", it is indicated that the associated image is "appropriate".

The selection unit 52 does not select the images P1, P4, and P5 whose values of the identifier are "1" among the plurality of images P1 to P5 included in the image data D21, and selects the images P2 and P3 whose values of the identifier are "0". As a result, the selection unit 52 outputs the image data D2 including the selected images P2 and P3.

Note that the designation of the image by the identifier is merely a proposal on whether the selection is appropriate or inappropriate, and does not force selection or non-selection by the selection unit 52. Therefore, depending on the processing capability of the hardware resource of the decoding device 2 or the like, the selection unit 52 needs not select an image determined as appropriate in a case where there is no available capacity, or may select an image determined as inappropriate in a case where there is an available capacity.

According to the encoding device 1 according to the present embodiment, the identifier indicates at least one of a fact that the image is suitable for task processing corresponding to the identifier and a fact that the image is not suitable for the task processing. Therefore, the decoding device 2 having received the bitstream BS can appropriately select, based on the identifier, at least one image to be used for the task processing from among the plurality of images decoded from the bitstream BS, whereby the execution accuracy of the task processing can be improved.

According to the encoding device 1 according to the present embodiment, the circuit 11 can appropriately determine whether or not the image is suitable for the task processing based on a result of image analysis before encoding the image.

According to the encoding device 1 according to the present embodiment, the task processing includes a machine task. Therefore, the decoding device 2 having received the bitstream BS can select, based on the identifier, an image suitable for the machine task, whereby the machine task can be appropriately executed.

According to the encoding device 1 according to the present embodiment, the task processing includes human vision. Therefore, the decoding device 2 having received the bitstream BS can select, based on the identifier, an image suitable for human vision, whereby human vision can be appropriately executed.

According to the encoding device 1 according to the present embodiment, the identifier includes the first value and the second value, where the first value indicates that the image is suitable for the task processing, and the second value indicates that the image is not suitable for the task processing. Therefore, the decoding device 2 having received the bitstream BS can easily determine an image to be selected and an image not to be selected based on the first value and the second value.

According to the encoding device 1 according to the present embodiment, the identifier includes the first value and the second value, where the first value indicates that the image is suitable for the task processing or the image is not suitable for the task processing, and the second value indicates that whether or not the image is suitable for the task processing is not specified. Therefore, the decoding device 2 having received the bitstream BS can easily determine an image to be selected and an image not to be selected based on the first value. The decoding device 2 can arbitrarily determine, in accordance with its own processing capability or the like, whether or not to select an image associated with an identifier of the second value.

According to the encoding device 1 according to the present embodiment, the identifier is stored in the header area 41 of the image associated with the identifier. Therefore, the decoding device 2 having received the bitstream BS can easily acquire an identifier associated with each image from the header area 41 of each image.

According to the decoding device 2 according to the present embodiment, the identifier indicates at least one of a fact that the image is suitable for task processing corresponding to the identifier and a fact that the image is not suitable for the task processing. Therefore, at least one image to be used for the task processing can be appropriately selected based on the identifier from among the plurality of images decoded from the bitstream BS, whereby the execution accuracy of the task processing can be improved.

According to the decoding device 2 according to the present embodiment, an image suitable for the task processing can be selected based on the identifier, whereby the execution accuracy of the task processing can be improved.

According to the decoding device 2 according to the present embodiment, the task processing includes a machine task. Therefore, an image suitable for the machine task can be selected based on the identifier, whereby the machine task can be appropriately executed.

According to the decoding device 2 according to the present embodiment, the task processing includes human vision. Therefore, an image suitable for human vision can be selected based on the identifier, whereby human vision can be appropriately executed.

According to the decoding device 2 according to the present embodiment, the identifier includes the first value and the second value, where the first value indicates that the image is suitable for the task processing, and the second value indicates that the image is not suitable for the task processing. Therefore, the circuit 21 can easily determine an image to be selected and an image not to be selected based on the first value and the second value.

According to the decoding device 2 according to the present embodiment, the identifier includes the first value and the second value, where the first value indicates that the image is suitable for the task processing or the image is not suitable for the task processing, and the second value indicates that whether or not the image is suitable for the task processing is not specified. Therefore, the circuit 21 can easily determine an image to be selected and an image not to be selected based on the first value. The circuit 21 can arbitrarily determine, in accordance with its own processing capability or the like, whether or not to select an image associated with an identifier of the second value.

According to the decoding device 2 according to the present embodiment, the identifier is stored in the header area 41 of the image associated with the identifier. Therefore, the circuit 21 can easily acquire an identifier associated with each image from the header area 41 of each image.

Various modifications of the embodiment of the present disclosure will be described below. The modifications can be applied in any combination.

### (First Modification)

In the above embodiment, each identifier is stored in the header area 41 of an image associated with the identifier, but the present invention is not limited to this. The circuit 11 may define an image group including a plurality of images, and collectively store, into the header area 41 of one image (e.g., head image) in the image group, a plurality of identifiers associated with the plurality of images included in the image group. The image group may be a group of pictures (GOP) including an I picture, a P picture, and a B picture, or may be a set of a plurality of arbitrary images.

Fig. 17 is a view illustrating the image data D1 and the identifier data D11. The image data D1 includes a plurality of images (32 images P1 to P32 in this example) in chronological order. The images P1 to P32 are included in the same image group. The identifier data D11 includes 32 identifiers associated with the 32 images P1 to P32. An identifier set including the 32 identifiers is stored in the header area 41 of the image P1 that is a head of the image group.

Although one identifier and one image are associated with each other in Fig. 17, one identifier and a plurality of images may be associated with each other. For example, when a plurality of identifiers having the same value are consecutive, one identifier of the head of the plurality of identifiers may be associated with a plurality of images corresponding to the plurality of identifiers.

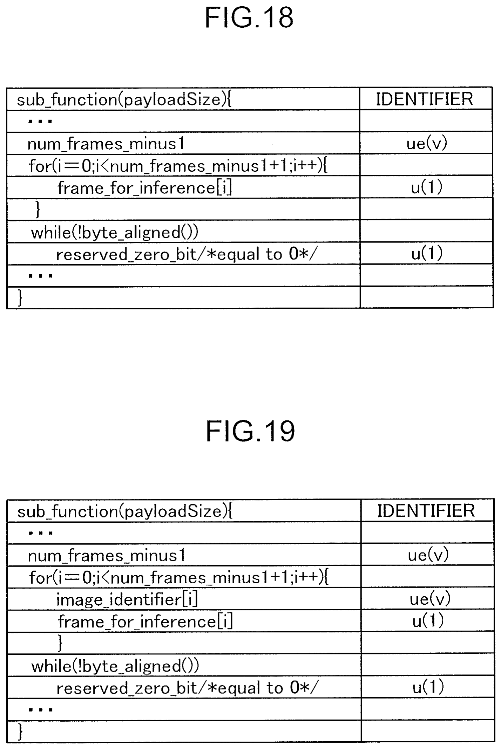

Fig. 18 is a view illustrating an example of syntax regarding setting of an identifier. The syntax includes an item of "num_frames_minus1". The value of "num_frames_minus1" is set to a value in which "1" is subtracted from the number of images included in the image group. In a case where the image group includes the 32 images P1 to P32, the value of "num_frames _minus1" is set to "31".

The value of "frame _for_inference" related to each of the plurality of images included in the image group is set by loop processing indicated by a for statement. At this time, which image each of the plurality of "frame_for_inference" is associated with may be determined according to the order of the loop processing indicated by the for statement.

In place of the description using a repeated statement such as a for statement, a plurality of setting values may be described in itemized form. The same applies to the following modifications.

According to the present modification, the decoding device 2 having received the bitstream BS can easily acquire the plurality of identifiers associated with the plurality of images included in the image group from the header area 41 of one image.

### (Second Modification)

In a first modification, the same number of identifiers as the plurality of images included in the image group are collectively stored in the header area 41 of one image in the image group, but the present invention is not limited to this. The circuit 11 may further encode, to the bitstream BS, specification information for specifying the image associated with the identifier among the plurality of images included in the image group.

Fig. 19 is a view illustrating an example of syntax regarding setting of an identifier. The syntax includes an item of "image_identifier[i]" indicating specification information. The value of "image _identifier[i]" is set by using a picture order count (POC), a difference value of the POC, the number of counts, an ID of a sequence parameter set (SPS), an ID of a picture parameter set (PPS), or the like.

The value of "frame_for_inference" is set for the image specified by the specification information among the plurality of images included in the image group.

Note that an image not specified by the specification information, that is, an image not associate with the identifier indicates that whether or not the image is suitable for the task processing is not specified.

In a case where the identifier set is not included in the image of the head in the image group, it is indicated that whether or not the image is suitable for the task processing is not specified for all the images included in the group.

According to the present modification, by specifying, with the specification information, the image associated with the identifier, it is not necessary to match the number of identifiers included in the identifier set with the number of images included in the image group, and therefore the data amount of the identifier can be reduced.

### (Third Modification)

In the above embodiment, the identifiers are associated with all the images, but the present invention is not limited to this. The circuit 11 needs not associate an identifier with an image that does not specify whether or not the image is suitable for task processing.

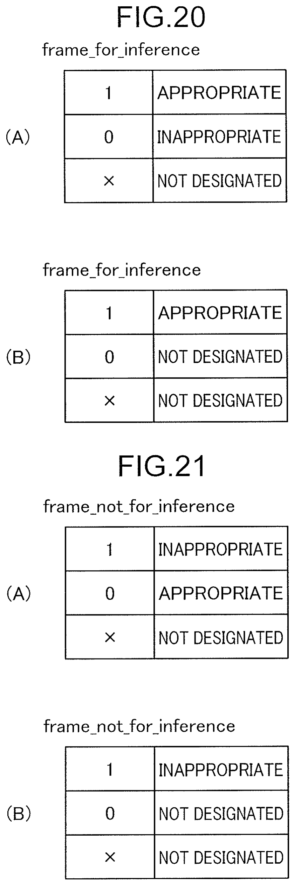

Fig. 20 is a view illustrating a first setting example of the value of the identifier in the syntax, corresponding to Fig. 9. As illustrated in (A), in a case where the value of "frame_for_inference" is set to "1", it is indicated that the associated image is "appropriate". In a case where the value of "frame_for_inference" is set to "0", it is indicated that the associated image is "inappropriate". The image not associated with an identifier indicates that whether or not the image is suitable for task processing is not specified on the encoding device 1 side.

Note that as illustrated in (B), in a case where the value of "frame_for_inference" is set to "0", or regarding an image not associated with an identifier, it may be indicated that whether or not the image is suitable for the task processing is not specified on the encoding device 1 side.

Fig. 21 is a view illustrating a second setting example of the value of the identifier in the syntax, corresponding to Fig. 10. As illustrated in (A), in a case where the value of "frame_not_for_inference" is set to "1", it is indicated that the associated image is "inappropriate". In a case where the value of "frame_not_for_inference" is set to "0", it is indicated that the associated image is "appropriate". The image not associated with an identifier indicates that whether or not the image is suitable for task processing is not specified on the encoding device 1 side.

Note that as illustrated in (B), in a case where the value of "frame_not_for inference" is set to "0", or regarding an image not associated with an identifier, it may be indicated that whether or not the image is suitable for the task processing is not specified on the encoding device 1 side.

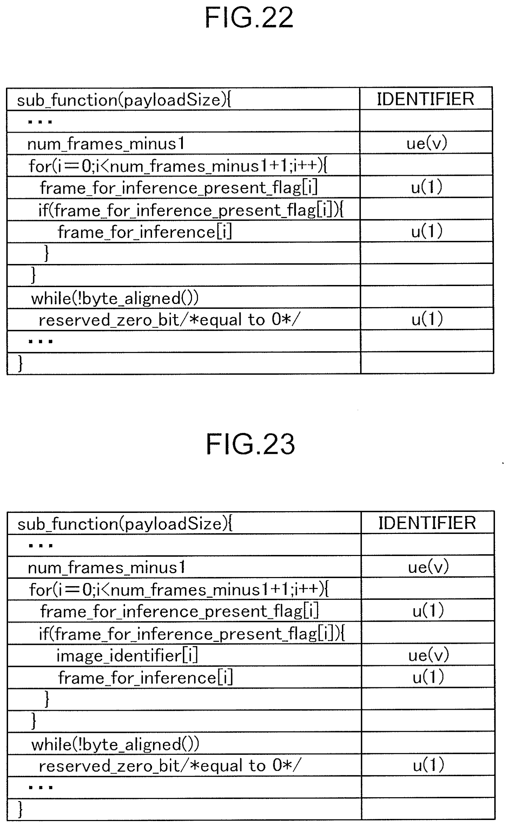

Fig. 22 is a view illustrating an example of syntax regarding setting of an identifier on the basis of Fig. 18. Fig. 23 is a view illustrating an example of syntax regarding setting of an identifier on the basis of Fig. 19. The syntax includes an item of "frame_for_inference_present_flag[i]". For an image associated with an identifier, the value of "frame_for_inference_present_flag[i]" is set to "1". For an image not associated with an identifier, the value of "frame_for_inference_present_flag[i]" is set to "0".

### (Fourth Modification)

In the above embodiment, the task processing executed by the task processing unit 4 is set to one specific type, but the present invention is not limited to this. The circuit 11 may further encode, to the bitstream BS, setting information for arbitrarily setting the type of task processing. The setting information may be stored in the SEI area included in the header area of the bitstream BS.

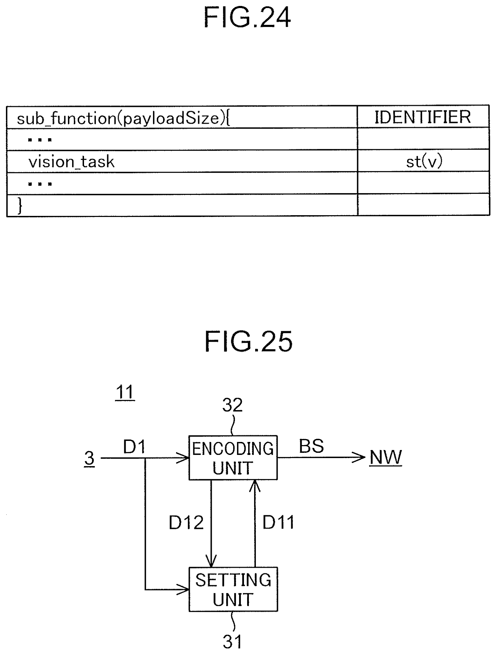

Fig. 24 is a view illustrating an example of syntax regarding setting of task processing. The syntax includes an item of "vision_task". In the item of "vision_task", a character string indicating the type of task processing is described. Alternatively, in place of the character string, an integer value indicating the type of task processing may be described. In this case, the correspondence relationship between the integer value and the type of task processing is set, and the encoding device 1 and the decoding device 2 share the setting information in advance.

According to the present modification, the type of task processing corresponding to the identifier can be arbitrarily set.

### (Fifth Modification)

In the above embodiment, the setting unit 31 sets the value of the identifier based on the result of the image analysis on the image before encoding, but the present invention is not limited to this. The setting unit 31 may set the value of the identifier based on the image after encoding.

Fig. 25 is a view illustrating a simplified configuration of the circuit 11 included in the encoding device 1. The circuit 11 includes a setting unit 31 and an encoding unit 32. The image data D1 including a plurality of images before encoding and image data D12 including a plurality of images encoded by the encoding unit 32 are input to the setting unit 31. Based on the image data D1 and D12, the setting unit 31 derives an encoding condition when the encoding unit 32 encodes each image. The encoding condition includes conditions related to the image quality of the image after encoding, such as a value of a quantization parameter, a PSNR value of the image after encoding, or a hierarchical level of a temporal layer. The larger the value of the quantization parameter is, the lower the image quality of the image after encoding is. The smaller the PSNR value is, the lower the image quality of the image after encoding is. The higher the hierarchical level of the temporal layer is, the lower the image quality of the image after encoding is.

In a case where the task processing is human vision, an image with low image quality deteriorates visibility. In a case where the task processing is object detection, an image with low image quality deteriorates estimation accuracy. Therefore, in a case where the task processing is human vision or object detection, the setting unit 31 may set an image whose image quality after encoding is equal to or greater than the threshold value as "appropriate", and may set an image whose image quality after encoding is less than the threshold value as "inappropriate".

In a case where the task processing is object tracking, the tolerance for a change in image quality is high, and therefore, the trajectory of an object can be detected even in an image with a low image quality. Therefore, in a case where the task processing is object tracking, the setting unit 31 may set all the images to "appropriate".

The setting unit 31 inputs, to the encoding unit 32, the identifier data D11 including an identifier whose value is set based on the image after encoding.

According to the present modification, after encoding an image, the circuit 11 can appropriately determine whether or not the image is suitable for task processing based on the encoding condition.

According to the present modification, after encoding an image, the circuit 11 can appropriately determine whether or not the image is suitable for task processing based on the image quality.

### (Sixth Modification)

In the above embodiment, the setting unit 31 sets the value of the identifier based on the result of the image analysis on the image before encoding, but the present invention is not limited to this. The setting unit 31 may set the value of the identifier based on related information related to the image before encoding.

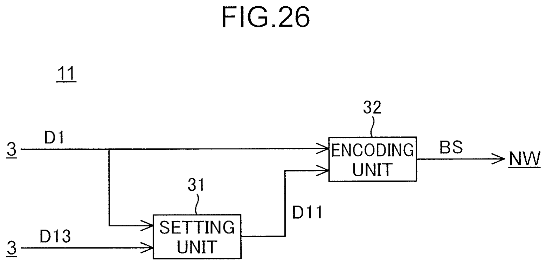

Fig. 26 is a view illustrating a simplified configuration of the circuit 11 included in the encoding device 1. The circuit 11 includes a setting unit 31 and an encoding unit 32. The image data D1 including a plurality of images before encoding and related information D13 detected by the image-capturing unit 3 when the image-capturing unit 3 captures a moving image are input to the setting unit 31 from the image-capturing unit 3.

The camera included in the image-capturing unit 3 has various built-in sensors such as a proximity sensor, a gyro sensor, an acceleration sensor, and a geomagnetic sensor. The related information D13 includes detection values detected by these sensors.

The setting unit 31 sets a value of the identifier based on the image data D1 and the related information D13.

In a case where an object located immediately in front of the camera is detected by the proximity sensor and this state continues for a certain period of time or more, the setting unit 31 may set an image captured during this period as "inappropriate". In a case where an object located immediately in front of the camera is detected by the proximity sensor and the object is moving at a high speed of a certain speed or faster, the setting unit 31 may set an image captured during this period as "appropriate".

In a case where camera shake is detected by a gyro sensor, an acceleration sensor, a geomagnetic sensor, or the like, and the level of the shake is equal to or greater than a threshold, the setting unit 31 may set an image captured during that time as "inappropriate".

According to the present modification, the circuit 11 can appropriately determine whether or not the image is suitable for task processing based on the related information D13 before encoding the image.

### (Seventh Modification)

In the above embodiment, there is one type of task processing, but the present invention is not limited to this. The task processing may include a plurality of types of task processing, and the circuit 11 may individually set "appropriate" or "inappropriate" of the image for each task processing. Hereinafter, an explanation will be given regarding an example in which the task processing includes first task processing and second task processing, the first task processing is object detection, and the second task processing is human vision. However, the task processing may include three or more types of task processing, and the type of task processing is not limited to object detection and human vision.

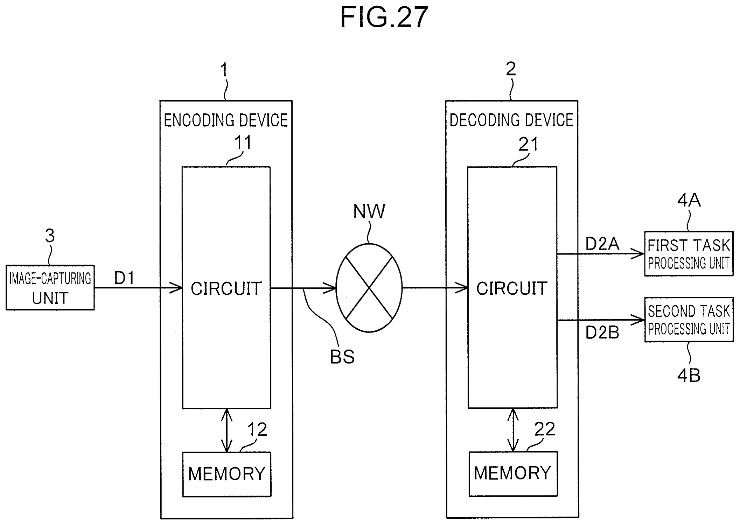

Fig. 27 is a view illustrating a simplified configuration of the image processing system according to the seventh modification. The image processing system includes a first task processing unit 4A and a second task processing unit 4B. The first task processing unit 4A executes the first task processing that is object detection based on first image data D2A input from the decoding device 2. The second task processing unit 4B executes the second task processing that is human vision based on second image data D2B input from the decoding device 2.

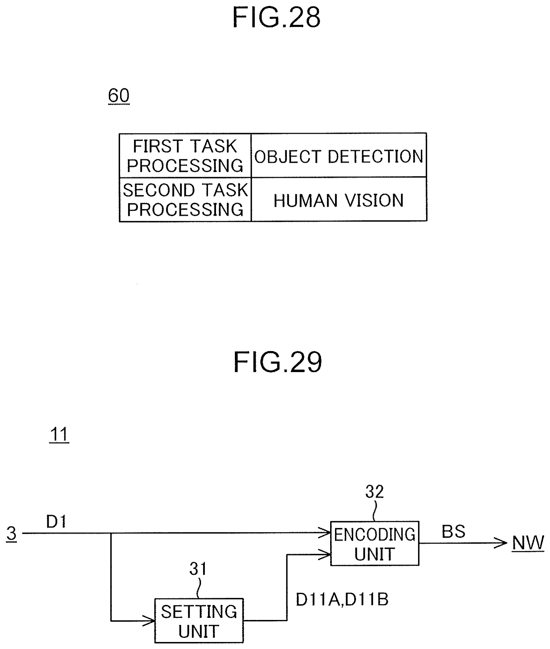

Fig. 28 is a view illustrating an example of setting information 60 of task processing. The setting information 60 indicates that the first task processing is object detection and the second task processing is human vision. The encoding device 1 and the decoding device 2 share the setting information 60 in advance.

Fig. 29 is a view illustrating a simplified configuration of the circuit 11 included in the encoding device 1. The circuit 11 includes a setting unit 31 and an encoding unit 32. The setting unit 31 inputs, to the encoding unit 32, first identifier data D11A including a plurality of first identifiers related to the first task processing, and second identifier data D11B including a plurality of second identifiers related to the second task processing.

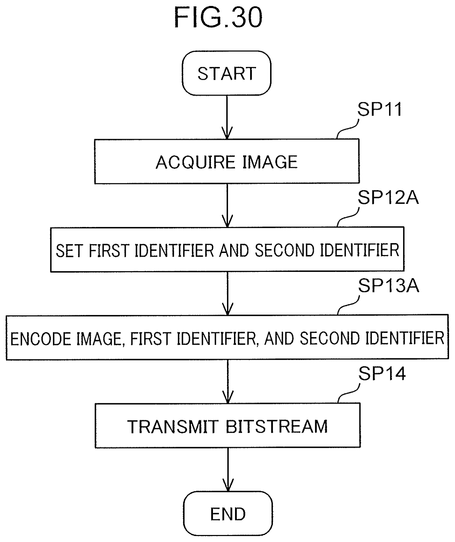

Fig. 30 is a flowchart showing the processing executed by the circuit 11 included in the encoding device 1.

First, in step SP11, the circuit 11 acquires a plurality of images included in the image data D1 input from the image-capturing unit 3. The image data D1 is input to the setting unit 31 and the encoding unit 32.

Next, in step SP12A, the setting unit 31 performs image analysis on each image of an encoding target included in the image data D1, and sets a value of the first identifier and a value of the second identifier based on a result of the image analysis. The setting unit 31 inputs, to the encoding unit 32, the first identifier data D11A including the first identifier whose value has been set and the second identifier data D11B including the second identifier whose value has been set.

Next, in step SP13A, the encoding unit 32 encodes, to the bitstream BS, the plurality of images included in the image data D1 having been input from the image-capturing unit 3, the plurality of first identifiers included in the first identifier data D11A having been input from the setting unit 31, and the plurality of second identifiers included in the second identifier data D11B having been input from the setting unit 31.

Next, in step SP14, the circuit 11 transmits the bitstream BS to the decoding device 2 via the transmission path NW.

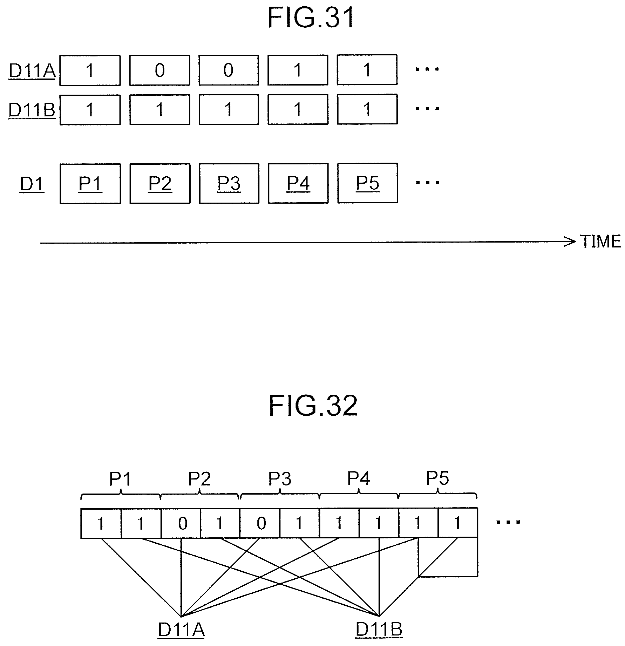

Fig. 31 is a view illustrating the image data D1, first identifier data D11A, and second identifier data D11B. The image data D1 includes a plurality of images (five images P1 to P5 in this example) in chronological order. The first identifier data D11A and the second identifier data D11B include the first identifier and the second identifier associated with each of the images P1 to P5. Each of the first identifier and the second identifier is 1-bit data, and each value of the first identifier and the second identifier is set to "1" or "0",

Fig. 32 is a view illustrating a bit string including the first identifier data D11A and the second identifier data D11B. The two bits of the head of the bit string indicate the respective values of the first identifier and the second identifier associated with the image P1. The subsequent two bits of the bit string indicate the respective values of the first identifier and the second identifier associated with the image P2. Similarly, consecutive two bits of the bit string indicate the respective values of the first identifier and the second identifier associated with the images P3 to P5. Note that in a case where the number of types of the task processing is N, consecutive N bits of the bit string indicate the respective values of the N identifiers associated with the same image.

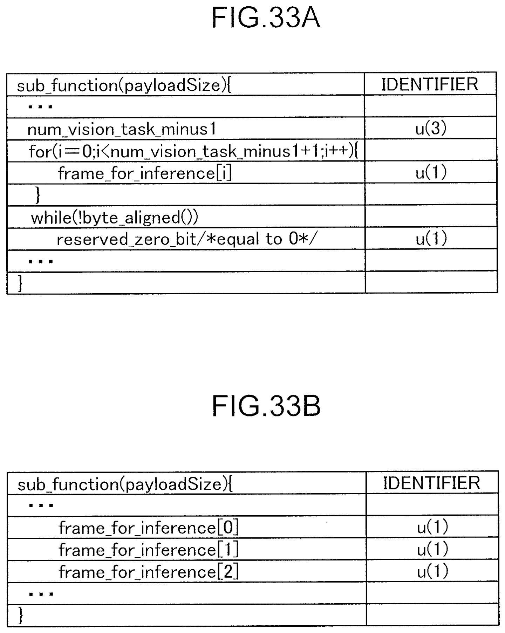

Fig. 33A is a view illustrating a first example of syntax regarding setting of the first identifier and the second identifier. The syntax includes an item of "num_vision_task_minus1". The value of "num_vision_task_minus1" is set to a value in which "1" is subtracted from the number of types of the task processing. The value of "frame_for_inference[i]" when i = 1 corresponds to a value of the first identifier, and the value of "frame_for_inference[i]" when i = 2 corresponds to a value of the second identifier. In a case where the value of "frame_for_inference[i]" is set to "1", it is indicated that the associated image is "appropriate". In a case where the value of "frame_for_inference[i]" is set to "0", it is indicated that the associated image is "inappropriate".

In place of the description using a repeated statement such as a for statement, a plurality of setting values of "frame_for_inference[i]" may be described in itemized form as illustrated in Fig. 33B.

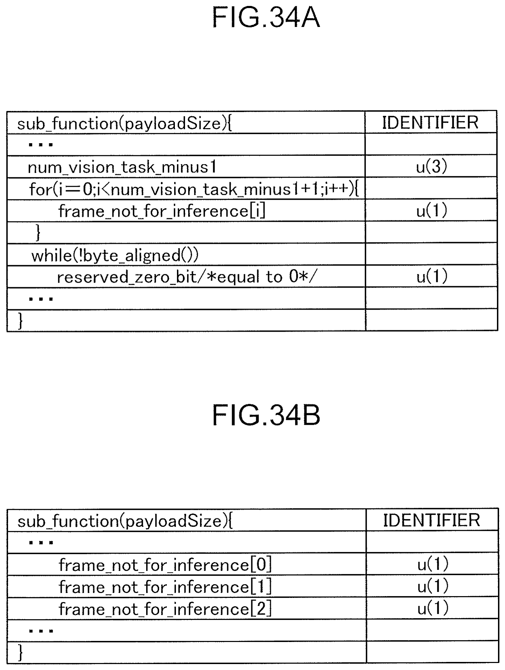

Fig. 34A is a view illustrating a second example of syntax regarding setting of the first identifier and the second identifier. The value of "frame_not_for_inference[i]" when i = 1 corresponds to a value of the first identifier, and the value of "frame_not_for_inference[i]" when i = 2 corresponds to a value of the second identifier. In a case where the value of "frame_not_for_inference[i]" is set to "1", it is indicated that the associated image is "inappropriate". In a case where the value of "frame_not_for_inference[i]" is set to "0", it is indicated that the associated image is "appropriate".

In place of the description using a repeated statement such as a for statement, a plurality of setting values of "frame_not_for inference[i]" may be described in itemized form as illustrated in Fig. 34B.

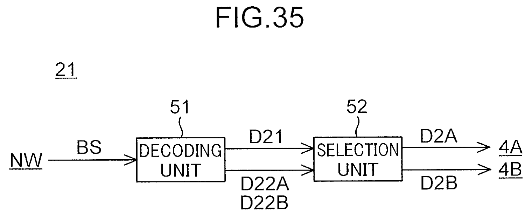

Fig. 35 is a view illustrating a simplified configuration of the circuit 21 included in the decoding device 2. The circuit 21 includes a decoding unit 51 and a selection unit 52. The decoding unit 51 inputs, to the selection unit 52, the image data D21, first identifier data D22A including a plurality of first identifiers related to the first task processing, and second identifier data D22B including a plurality of second identifiers related to the second task processing.

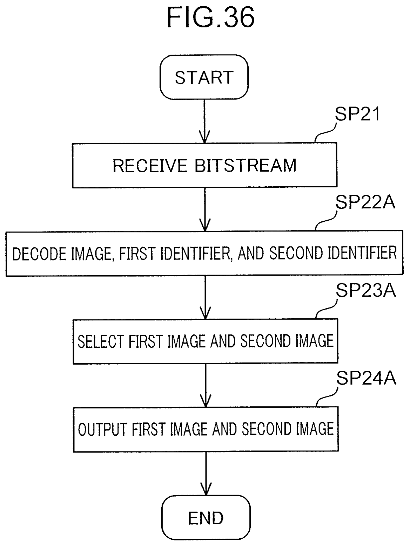

Fig. 36 is a flowchart showing the processing executed by the circuit 21 included in the decoding device 2.

First, in step SP21, the circuit 21 receives the bitstream BS from the encoding device 1 via the transmission path NW. The bitstream BS is input to the decoding unit 51.

Next, in step SP22A, by decoding, from the bitstream BS, the plurality of images and the first identifier and the second identifier associated with each image, the circuit 21 outputs the image data D21 corresponding to the image data D1, the first identifier data D22A corresponding to the first identifier data D11A, and the second identifier data D22B corresponding to the second identifier data D11B. The image data D21, the first identifier data D22A, and the second identifier data D22B are input to the selection unit 52.

Next, in step SP23A, based on the first identifier included in the first identifier data D22A, the selection unit 52 selects at least one first image to be used for the first task processing from among the plurality of images included in the image data D21. Based on the second identifier included in the second identifier data D22B, the selection unit 52 selects at least one second image to be used for the second task processing from among the plurality of images included in the image data D21.

Next, in step SP24A, the selection unit 52 outputs the first image data D2A including the at least one first image having been selected and the second image data D2B including the at least one second image having been selected. The first image data D2A is input to the first task processing unit 4A, and the second image data D2B is input to the second task processing unit 4B. The first task processing unit 4A executes the first task processing by using at least one first image included in the input first image data D2A. The second task processing unit 4B executes the second task processing by using at least one second image included in the input second image data D2B.

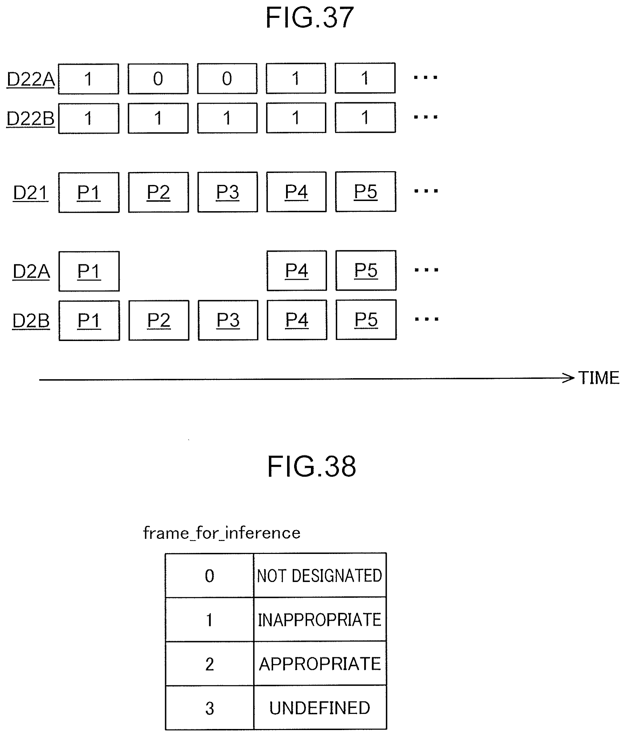

Fig. 37 is a view illustrating an example of selection of the first image and the second image based on the first identifier data D22A and the second identifier data D22B. Fig. 37 illustrates an example in which, in a case where the value of "frame_for_inference[i]" is set to "1", it is indicated that the associated image is "appropriate", and in a case where the value of "frame_for_inference[i]" is set to "0", it is indicated that the associated image is "inappropriate".

The image data D21 includes a plurality of images (five images P1 to P5 in this example) in chronological order. The first identifier data D22A includes the first identifier associated with each of the images P1 to P5. The values of the first identifiers are set to "1", "0", "0", "1", and "1" for the images P1 to P5, respectively. The second identifier data D22B includes the second identifier associated with each of the images P1 to P5. The values of the second identifiers are set to "1" for all the images P1 to P5.

The selection unit 52 selects the images P1, P4, and P5 whose values of the first identifier are "1" among the plurality of images P1 to P5 included in the image data D21, and does not select the images P2 and P3 whose values of the first identifier are "0". As a result, the selection unit 52 outputs the first image data D2A including the selected images P1, P4, and P5.

The selection unit 52 selects the images P1 to P5 whose values of the second identifier are "1" among the plurality of images P1 to P5 included in the image data D21. As a result, the selection unit 52 outputs the second image data D2B including all the images P1 to P5.

According to the present modification, the first image suitable for the machine task can be selected based on the first identifier, whereby the machine task can be appropriately executed. The second image suitable for human vision can be selected based on the second identifier, whereby human vision can be appropriately executed.

### (Eighth Modification)

In the above embodiment, each identifier is 1-bit data, but the present invention is not limited to this. Each identifier may be multiple-bit data.

Fig. 38 is a view illustrating a setting example of a value of an identifier in syntax. In this example, each identifier is 2-bit data.

In a case where the value of "frame_for_inference" is set to "0", it is indicated that "appropriate" or "inappropriate" is not designated on the encoding device 1 side, that is, whether or not the associated image is suitable for task processing is not specified on the encoding device 1 side. In a case where the value of "frame_for_inference" is set to "1", it is indicated that the associated image is "inappropriate". In a case where the value of "frame_for _inference" is set to "2", it is indicated that the associated image is "appropriate". Note that the value of "3" in "frame_for_inference" is assigned for future expansion and is currently undefined.

According to the present modification, since three states of "appropriate", "inappropriate", and "not designated" can be designated by each 2-bit identifier, it is not necessary to mix an image associated with an identifier and an image not associated with an identifier.

### (Ninth Modification)

In a ninth modification, a combination of the third modification and the seventh modification will be described.

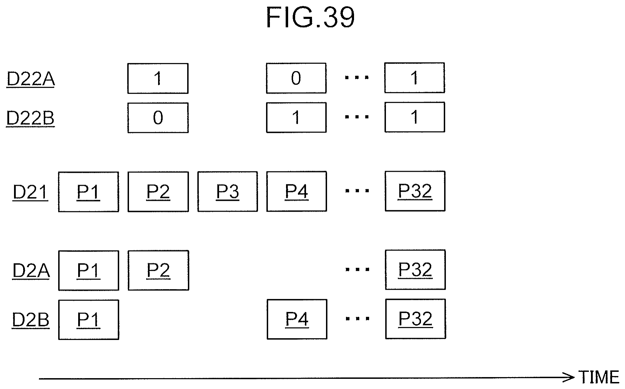

Fig. 39 is a view illustrating an example of selection of the first image and the second image based on the first identifier data D22A and the second identifier data D22B. Fig. 39 illustrates an example in which, in a case where the value of "frame_for_inference[i]" is set to "1", it is indicated that the associated image is "appropriate", in a case where the value of "frame_for_inference[i]" is set to "0", it is indicated that the associated image is "inappropriate", and regarding an image not associated with the first identifier and the second identifier, it is indicated that whether or not the image is suitable for the task processing is not specified on the encoding device 1 side.

The selection unit 52 selects, among the plurality of images P1 to P32 included in the image data D21, the images P2 and P32 whose values of the first identifier are "1" and the image P1 not associated with the first identifier and the second identifier. The selection unit 52 does not select the image P4 whose values of the first identifier are "0" and the image P3 not associated with the first identifier and the second identifier. As a result, the selection unit 52 outputs the first image data D2A including the selected images P1, P2, and P32.

The selection unit 52 selects, among the plurality of images P1 to P32 included in the image data D21, the images P4 and P32 whose values of the second identifier are "1" and the image P1 not associated with the first identifier and the second identifier. The selection unit 52 does not select the image P2 whose values of the second identifier are "0" and the image P3 not associated with the first identifier and the second identifier. As a result, the selection unit 52 outputs the second image data D2B including the selected images P1, P4, and P32.

### (Tenth Modification)

In the seventh modification, the first task processing executed by the first task processing unit 4A and the second task processing executed by the second task processing unit 4B are set in advance by the setting information 60, but the present invention is not limited to this. The circuit 11 may further encode, to the bitstream BS, correspondence information indicating correspondence between the first identifier and the second identifier and the first task processing and the second task processing.

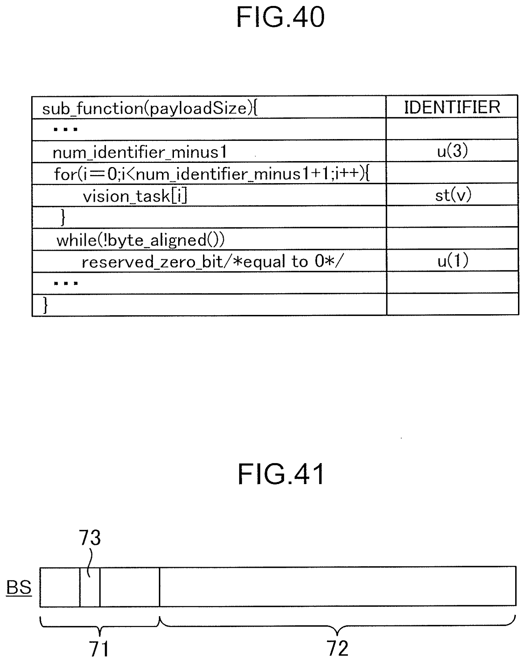

Fig. 40 is a view illustrating an example of syntax regarding setting of task processing. The syntax includes an item of "num_identifier_minus1". The value of "num_identifier_minus1" is set to a value in which "1" is subtracted from the number of identifiers associated with the image. The syntax includes an item of "vision_task[i]". In the item of "vision_task[i]", a character string indicating the type of task processing is described. Alternatively, in place of the character string, an integer value indicating the type of task processing may be described. In this case, the correspondence relationship between the integer value and the type of task processing is set, and the encoding device 1 and the decoding device 2 share the setting information in advance.

Fig. 41 is a view illustrating a simplified configuration of the bitstream BS. The bitstream BS includes a header area 71 and a payload area 72. The header area 71 includes an SEI area 73 for storing additional information. The encoding unit 32 stores, into the SEI area 73, encoding data of the correspondence information indicating the correspondence between the plurality of identifiers and the multiple types of task processing. However, the encoding unit 32 may store the encoded data of the identifier associated with the image into a VPS, an SPS, a PPS, a PH, an SH, an APS, a tile header, or the like, in place of the SEI area 73. The SEI area 73 may be prefix_SEI located before the payload area 72 or may be suffix_SEI located after the payload area 72.

According to the present modification, multiple types of task processing can be arbitrarily set in the correspondence information, and the execution accuracy of the task processing can be improved with respect to each of the multiple types of task processing having been set.

### (Eleventh Modification)

In an eleventh modification, a combination of the first modification and the seventh modification will be described.

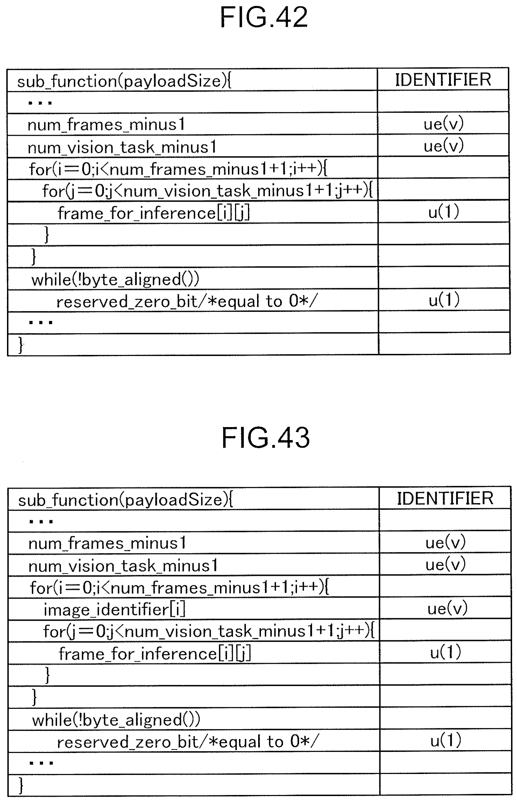

Fig. 42 is a view illustrating an example of syntax regarding setting of the first identifier and the second identifier. In a case where the value of "frame_for_inference[i][j]" is set to "1", it is indicated that the i-th image in the image group is "appropriate" for the j-th task processing. In a case where the value of "frame_for_inference[i][j]" is set to "0", it is indicated that the i-th image in the image group is "inappropriate" for the j-th task processing.

### (Twelfth Modification)

In a twelfth modification, a combination of the second modification and the seventh modification will be described.

Fig. 43 is a view illustrating an example of syntax regarding setting of the first identifier and the second identifier. In a case where the value of "frame_for_inference[i][j]" is set to "1", it is indicated that the i-th image specified by the specification information in the image group is "appropriate" for the j-th task processing. In a case where the value of "frame_for_inference[i][j]" is set to "0", it is indicated that the i-th image specified by the specification information in the image group is "inappropriate" for the j-th task processing.

### (Thirteenth Modification)

In a thirteenth modification, a combination of the third modification and the seventh modification will be described.

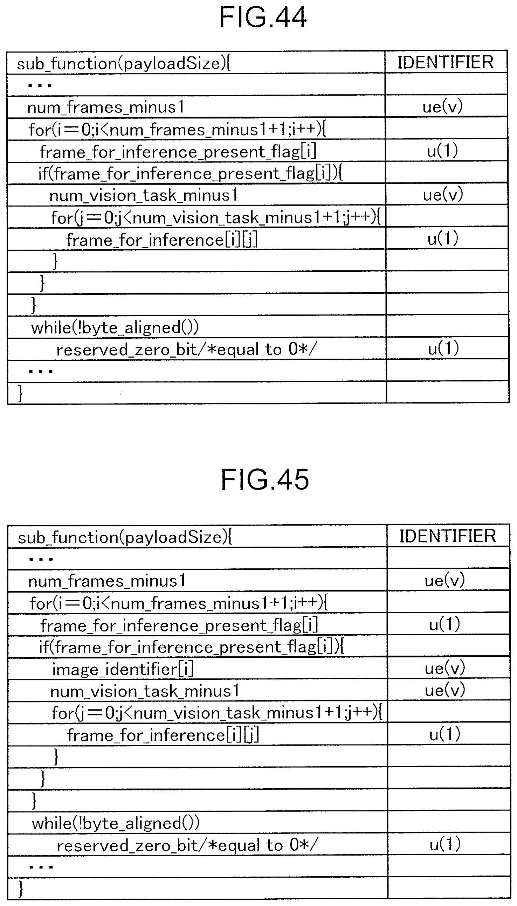

Fig. 44 is a view illustrating an example of syntax regarding setting of the first identifier and the second identifier. For an image associated with an identifier, the value of "frame_for_inference_present flag[i]" is set to "1". For an image not associated with an identifier, the value of "frame_for_inference_present_flag[i]" is set to "0".

Regarding an image associated with an identifier, in a case where the value of "frame_for_inference[i][j]" is set to "1", it is indicated that the i-th image in the image group is "appropriate" for the j-th task processing. In a case where the value of "frame _for_inference[i][j]" is set to "0", it is indicated that the i-th image in the image group is "inappropriate" for the j-th task processing.

### (Fourteenth Modification)

In a fourteenth modification, a combination of the second modification, the third modification, and the seventh modification will be described.

Fig. 45 is a view illustrating an example of syntax regarding setting of the first identifier and the second identifier. Regarding an image associated with an identifier, in a case where the value of "frame_for_inference[i][j]" is set to "1", it is indicated that the i-th image specified by the specification information in the image group is "appropriate" for the j-th task processing. In a case where the value of "frame_for_inference[i][j]" is set to "0", it is indicated that the i-th image specified by the specification information in the image group is "inappropriate" for the j-th task processing.

The present disclosure is particularly useful for application to an image processing system including an encoding device that encodes an image to a bitstream and transmits the bitstream, and a decoding device that decodes an image from a received bitstream.

## Claims

1. A decoding device comprising:
a circuit; and
a memory connected to the circuit,
wherein the circuit
decodes, from a bitstream, an image and an identifier associated with the image, and
the identifier indicates at least one of a fact that the image is suitable for task processing corresponding to the identifier and a fact that the image is not suitable for the task processing.

2. The decoding device according to claim 1, wherein
the image includes a plurality of images, and
the circuit further selects, based on the identifier, at least one image to be used for the task processing from the plurality of images.

3. The decoding device according to claim 1, wherein the task processing includes a machine task.

4. The decoding device according to claim 1, wherein the task processing includes human vision.

5. The decoding device according to claim 1, wherein
the identifier includes a plurality of identifiers,
the task processing includes multiple types of task processing, and
the plurality of identifiers correspond to different types of task processing among the multiple types of task processing.

6. The decoding device according to claim 5, wherein
the plurality of identifiers include a first identifier and a second identifier,
the task processing corresponding to the first identifier includes a machine task, and
the task processing corresponding to the second identifier includes human vision.

7. The decoding device according to claim 1, wherein
the identifier includes a first value and a second value,
the first value indicates that the image is suitable for the task processing, and
the second value indicates that the image is not suitable for the task processing.

8. The decoding device according to claim 1, wherein
the identifier includes a first value and a second value,
the first value indicates that the image is suitable for the task processing or that the image is not suitable for the task processing, and
the second value indicates that whether or not the image is suitable for the task processing is not specified.

9. The decoding device according to claim 1, wherein
the image includes a plurality of images,
the plurality of images include an image not associated with the identifier, and
the image not associated with the identifier indicates an image that does not specify whether or not the image is suitable for the task processing.

10. The decoding device according to claim 1, wherein
the identifier includes one or more identifiers,
the task processing includes one or more types of task processing, and
the circuit further decodes, from the bitstream, correspondence information indicating a correspondence between the one or more identifiers and the one or more types of task processing.

11. The decoding device according to claim 10, wherein the correspondence information is stored in a header area of the bitstream.

12. The decoding device according to claim 1, wherein the identifier is stored in a header area of the image associated with the identifier.

13. The decoding device according to claim 1, wherein
the image includes a plurality of images,
the identifier includes one or more identifiers, and
the one or more identifiers are stored in a header area of one image included in the plurality of images, and are associated with the one image and one or more images different from the one image.

14. The decoding device according to any one of claims 11 to 13, wherein the header area is an SEI area.

15. The decoding device according to claim 1, wherein
the image includes a plurality of images, and
the circuit further decodes, from the bitstream, specification information for specifying the image associated with the identifier among the plurality of images.

16. An encoding device comprising:
a circuit; and
a memory connected to the circuit,
wherein the circuit
encodes, to a bitstream, an image and an identifier associated with the image, and
the identifier indicates at least one of a fact that the image is suitable for task processing corresponding to the identifier and a fact that the image is not suitable for the task processing.

17. The encoding device according to claim 16, wherein the circuit sets a value of the identifier based on an encoding condition under which the image is encoded.

18. The encoding device according to claim 16, wherein the circuit sets a value of the identifier based on an image quality of the image after encoding.

19. The encoding device according to claim 16, wherein
the circuit
acquires, from an external device, an image of an encoding target and related information related to the image, and
sets a value of the identifier based on the related information.

20. The encoding device according to claim 16, wherein
the circuit
performs image analysis on an image of an encoding target, and
sets a value of the identifier based on a result of the image analysis.

21. The encoding device according to claim 16, wherein the task processing includes a machine task.

22. The encoding device according to claim 16, wherein the task processing includes human vision.

23. The encoding device according to claim 16, wherein
the identifier includes a plurality of identifiers,
the task processing includes multiple types of task processing, and
the plurality of identifiers correspond to different types of task processing among the multiple types of task processing.

24. The encoding device according to claim 23, wherein
the plurality of identifiers include a first identifier and a second identifier,
the task processing corresponding to the first identifier includes a machine task, and
the task processing corresponding to the second identifier includes human vision.

25. The encoding device according to claim 16, wherein
the identifier includes a first value and a second value,
the first value indicates that the image is suitable for the task processing, and
the second value indicates that the image is not suitable for the task processing.

26. The encoding device according to claim 16, wherein
the identifier includes a first value and a second value,
the first value indicates that the image is suitable for the task processing or that the image is not suitable for the task processing, and
the second value indicates that whether or not the image is suitable for the task processing is not specified.

27. The encoding device according to claim 16, wherein
the image includes a plurality of images,
the plurality of images include an image not associated with the identifier, and
the image not associated with the identifier indicates an image that does not specify whether or not the image is suitable for the task processing.

28. The encoding device according to claim 16, wherein
the identifier includes one or more identifiers,
the task processing includes one or more types of task processing, and
the circuit further encodes, to the bitstream, correspondence information indicating correspondence between the one or more identifiers and the one or more types of task processing.

29. The encoding device according to claim 28, wherein the correspondence information is stored in a header area of the bitstream.

30. The encoding device according to claim 16, wherein the identifier is stored in a header area of the image associated with the identifier.

31. The encoding device according to claim 16, wherein
the image includes a plurality of images,
the identifier includes one or more identifiers, and
the one or more identifiers are stored in a header area of one image included in the plurality of images, and are associated with the one image and one or more images different from the one image.

32. The encoding device according to any one of claims 29 to 31, wherein the header area is an SEI area.

33. The encoding device according to claim 16, wherein
the image includes a plurality of images, and
the circuit further encodes, to the bitstream, specification information for specifying the image associated with the identifier among the plurality of images.

34. decoding method comprising:
by a decoding device,
decoding, from a bitstream, an image and an identifier associated with the image,
wherein the identifier indicates at least one of a fact that the image is suitable for task processing corresponding to the identifier and a fact that the image is not suitable for the task processing.

35. An encoding method comprising:
by an encoding device,
encoding, to a bitstream, an image and an identifier associated with the image,
wherein the identifier indicates at least one of a fact that the image is suitable for task processing corresponding to the identifier and a fact that the image is not suitable for the task processing.
